Europäisches Patentamt

European Patent Office

Office européen des brevets

(19)

(11) Numéro de publication : **0 022 115 B1**

# (12) FASCICULE DE BREVET EUROPÉEN

(45) Date de publication du fascicule du brevet :
03.08.83

(51) Int. Cl.³ : **H 02 B 11/04, H 02 G 5/00**

(21) Numéro de dépôt : **80870029.8**

(22) Date de dépôt : **28.05.80**

(54) **Dispositif de commutation électrique compact.**

(30) Priorité : **06.06.79 BE 195590**

(43) Date de publication de la demande :
**07.01.81 Bulletin 81/01**

(45) Mention de la délivrance du brevet :
**03.08.83 Bulletin 83/31**

(84) Etats contractants désignés :
**AT CH DE LI**

(56) Documents cités :
**DE A 2 233 282**
**FR A 1 261 840**
**FR A 2 162 293**

(73) Titulaire : **L 'Electricité Industrielle Belge Société Anonyme**
**Square du Bastion, 1A Bte 20**
**B-1050 Bruxelles (BE)**

(72) Inventeur : **Quoidbach, Barthélémy L.**
**Cité de Husquet 28**
**B-4820 Dison (BE)**
Inventeur : **Lehnen, Josef Aloys**
**rue de Verviers 40**
**B-4841 Henri-Chapelle (BE)**

(74) Mandataire : **Vanderperre, Robert et al**
**Bureau VANDER HAEGHEN 63 Avenue de la Toison d'Or**
**B-1060 Bruxelles (BE)**

Jouve, 18, rue St-Denis, 75001 Paris, France

## Dispositif de commutation électrique compact

La présente invention concerne un dispositif de commutation électrique compact pour barres collectrices haute tension.

Les dispositifs de commutation pour barres haute tension comprennent usuellement une partie fixe logée à l'intérieur d'un boîtier ou caisson métallique et une partie mobile extérieure. La partie fixe assure à la fois la fonction de support pour les barres collectrices et la fonction de liaison électrique entre la partie mobile et les barres collectrices haute tension.

Diverses formes d'exécution ont été proposées pour la partie fixe du dispositif de commutation. Pour simplifier la fabrication et le montage, il a notamment été prévu de combiner en un seul organe les fonctions de support et de liaison électrique. Deux modes de réalisation sont illustrés, par exemple, par CH-A-337253 et DE-A-2146769. Dans le dispositif décrit dans le brevet suisse précité, chaque barre collectrice est fixée sur un isolateur en forme de cloche, traversé axialement par un conducteur électrique assurant la liaison entre la barre et l'organe de contact électrique fixe. Dans ce montage, la barre collectrice se trouve placée derrière l'organe de contact fixe et pour un jeu de barres pour tension triphasée, les trois isolateurs sont disposés sur une ligne diagonale par rapport à la direction des barres collectrices, et les isolateurs sont fixés à leur extrémité antérieure sur des plaques de séparation. Un tel dispositif n'utilise pas le volume de façon satisfaisante et il est relativement encombrant ; en outre, la ventilation de la cavité intérieure des isolateurs ne se fait point de manière satisfaisante.

Dans le dispositif décrit dans la seconde publication citée, les organes de support sont agencés pour que les barres soient supportées par dessous en des positions occupant les sommets d'un triangle équilatéral. L'encombrement en hauteur de ce dispositif est non satisfaisant en pratique, et il nécessite un isolateur de fixation arrière pour monter le dispositif de support sur une paroi ou une cloison, ce qui rend l'encombrement en profondeur peu satisfaisant également.

Pour réduire l'encombrement en profondeur on a déjà proposé (FR-A-2162293) de disposer les barres collectrices en sorte que leurs axes soient situés au sommet d'un triangle, un premier côté du triangle s'étendant perpendiculairement par rapport à l'axe des organes de contact électrique fixes tandis que le second côté du triangle s'étend, par rapport au sommet dudit triangle (vu de dessous), du côté des organes de contact électrique fixes, la longueur des deux premiers côtés étant inférieure à la longueur de la base du triangle, et dans lequel chaque organe de support de barre collectrice comprend également une partie isolateur en matière diélectrique présentant une cavité intérieure de forme évasée dont la section transversale croît progressivement avec la distance qui la sépare du sommet dudit triangle, ladite partie isolateur portant sur sa surface extérieure, en une position écartée axialement de son extrémité opposée à celle qui est tournée vers les barres collectrices, des brides d'attache pour fixer ledit organe de support à l'intérieur du caisson.

Dans cette forme de réalisation une des barres se trouve au niveau des organes de contact fixes, les deux autres étant décalés en hauteur d'un même côté par rapport aux organes de contact fixes. Par son encombrement en hauteur, ce dispositif ne réalise point une compacité optimale.

Le problème que vise à résoudre l'invention est celui de procurer un dispositif de commutation électrique haute tension qui tout en étant d'un montage simple et en ayant une tenue diélectrique excellente en haute tension, présente cependant un encombrement réduit aussi bien en hauteur qu'en profondeur.

Pour résoudre ce problème, il a fallu solutionner deux points techniques : assurer un isolement diélectrique adéquat entre les organes sous tension et créer des lignes de fuite de tension les plus longues possibles. La résolution de ces points techniques va logiquement à contresens avec la réduction de l'encombrement global du dispositif.

Dans le dispositif de commutation suivant l'invention, ces points techniques se trouvent néanmoins résolus de façon avantageuse grâce à un agencement caractérisé par le fait que le triangle formé par les axes des barres collectrices est un triangle isocèle dont le premier côté est réalisé par l'un des côtés égaux placé symétriquement par rapport à l'axe des organes de contact électrique fixes.

Il est déjà connu en soi de disposer les barres collectrices en triangle isocèle (voir par exemple FR-A-1261840 et DE-A-2233282) mais dans ces dispositions connues, c'est la base du triangle isocèle qui se trouve disposée symétriquement par rapport à l'axe respectif et non pas un des côtés courts du triangle.

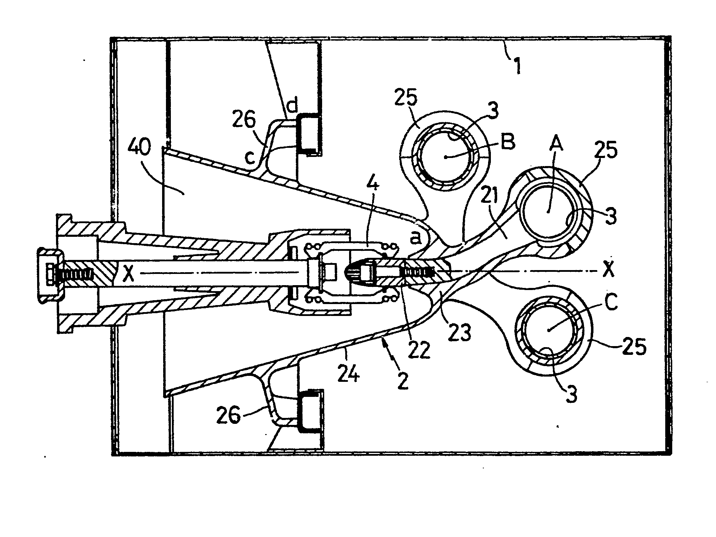

L'invention est exposée avec plus de détails dans ce qui suit avec référence au dessin ci-joint.

Par la référence numérique 1 est désigné le caisson métallique dans lequel sont logés trois organes de support 2 pour maintenir les barres collectrices haute tension 3. Un seul organe de support 2 est visible en entier, en coupe axiale. Chaque organe de support 2 comprend une branche conductrice 21 qui se trouve en contact avec une barre collectrice 3 et se termine à son autre extrémité par un organe de contact fixe 22 destiné à coopérer avec un organe de contact mobile 4 formé par une broche tulipe. La branche conductrice 21, avantageusement de section ovale, est revêtue d'une gaine en matière diélectrique 23 qui se termine par une partie isolateur 24. L'organe de contact fixe 22 émerge axialement à l'intérieur de la cavité de la partie isolateur 24.

Les trois organes de support 2 sont conformés de telle manière que les barres collectrices 3 soient maintenues avec leurs axes situés aux sommets d'un triangle isocèle ABC de sommet A et de base BC. Un des côtés égaux du triangle isocèle, en l'occurrence le côté AC, s'étend perpendiculairement à l'axe X-X de l'organe de contact fixe 22 et symétriquement par rapport audit axe X-X. Le second des côtés égaux, en l'occurrence le côté AB, s'étend, par rapport au sommet A du triangle isocèle, du côté de l'organe de contact fixe 22. La longueur des côtés égaux AB et AC est inférieure à la longueur de la base BC du triangle. Pour assurer une optimisation géométrique de la disposition, il a été trouvé avantageux de choisir pour les longueurs des côtés du triangle isocèle, un rapport de la longueur des côtés égaux à la longueur de la base égal à une valeur allant pratiquement de 0,55 à 0,65, ceci assurant une tenue diélectrique optimale du dispositif en haute tension pour un encombrement minimum.

A son extrémité portant une barre collectrice 3, chaque organe de support 2 comporte une tête 25 en matière diélectrique qui recouvre la barre collectrice et l'isole par rapport aux autres barres.

Suivant l'invention la partie isolateur 24 de chaque organe 2 est formée avec une cavité intérieure 40 de forme évasée, la section transversale ovale de cette cavité 40 croissant progressivement à mesure qu'augmente sa distance du sommet du triangle isocèle. La surface extérieure de la partie isolateur 24 porte des brides d'attache 26 pour fixer l'organe de support 2 à l'intérieur du caisson 1. Les brides d'attache 26 sont disposées en des positions écartées axialement de l'extrémité libre de l'isolateur 24, c'est-à-dire l'extrémité opposée à celle qui est tournée vers les barres collectrices 3.

Cette disposition particulière, originale, assure une ligne de fuite de tension a-b-c-d plus longue pour une longueur d'encombrement a-b réduite que lorsque les brides d'attache sont prévues sur ou près du bord comme c'est habituellement le cas dans les dispositifs connus. On réalise ainsi un dispositif plus compact ayant une excellente tenue diélectrique à la haute tension.

## Revendications

1. Dispositif de commutation électrique haute tension pour barres collectrices (3), dans lequel les barres collectrices (3) sont maintenues de telle sorte que leurs axes soient situés au sommet d'un triangle (ABC), un premier côté (AC) du triangle s'étendant perpendiculairement par rapport à l'axe des organes de contact électrique fixes (22) tandis que le second côté (AB) du triangle s'étend, par rapport au sommet dudit triangle (vu de dessous), du côté des organes de contact électrique fixes (22), la longueur des deux premiers côtés (AC, AB) étant inférieure à la longueur de la base (BC) du triangle, et dans lequel chaque organe de support de barre collectrice (3) comprend également une partie isolateur (24) en matière diélectrique présentant une cavité intérieure de forme évasée dont la section transversale croît progressivement avec la distance qui la sépare du sommet (A) dudit triangle, ladite partie isolateur portant sur sa surface extérieure, en une position écartée axialement de son extrémité opposée à celle qui est tournée vers les barres collectrices (3), des brides d'attache pour fixer ledit organe de support à l'intérieur du caisson (1), caractérisé par le fait que le triangle formé par les axes (A, B, C) des barres collectrices (3) est un triangle isocèle dont le premier côté est réalisé par l'un des côtés égaux placé symétriquement par rapport à l'axe (X-X) des organes de contact électrique fixes (22).

2. Dispositif selon la revendication 1, caractérisé en ce que le rapport de la longueur des côtés égaux du triangle isocèle (ABC) à la longueur de la base (BC) dudit triangle est égal à une valeur allant de 0,55 à 0,65.

3. Dispositif selon la revendication 1, caractérisé en ce que chaque organe de support (2) comporte une branche conductrice (21) de section transversale ovale.

4. Dispositif selon la revendication 1, caractérisé en ce que la partie isolateur (24) de chaque organe de support a une section transversale ovale.

5. Dispositif selon la revendication 1, caractérisé en ce que chaque organe de support (2) comporte, à son extrémité portant une barre collectrice, une tête (25) en matière diélectrique qui recouvre la barre collectrice (3) et isole celle-ci des autres barres collectrices.

## Claims

1. High voltage electrical switching device for collecting bars (3) in which the collecting bars (3) are held such that their axes are situated at the apices of a triangle (ABC), a first side (AC) of the triangle extending perpendicular to the axis of the stationary electrical contact means (22) whereas the second side (A B) of the triangle extends, relative to the apex of said triangle (as seen from underneath), on the side of the stationary electrical contact means (22), the length of the first two sides (AC, AB) being smaller than the length of the base (BC) of the triangle, and in which each support device for a collecting bar (3) also comprises an isolator portion (24) made of a dielectric material and having a flared inner cavity the cross section of which is continuously increasing with the distance from the apex (A) of the triangle, said isolator portion having its outer surface provided at a section which is axially spaced apart from its end opposite the end facing the collecting bars (3), with attachment means for securing said support device inside the casing (1), characterized in that the triangle formed by the axes (A, B, C) of the collecting bars (3) is an isosceles triangle having its first side formed by one of the equal sides symmetrically placed relative to the axis (X-X) of the stationary electrical contact means (22).

2. A switching device according to claim 1, characterized in that the ratio of the length of the equal sides of the isosceles triangle (ABC) to the length of the base (BC) of said triangle is equal to a value from 0.55 to 0.65.

3. A switching device according to claim 1, characterized in that each support means (2) has a conducting member (21) having an oval cross-section.

4. A switching device according to claim 1, characterized in that the isolator portion (24) of each support means has an oval cross-section.

5. A switching device according to claim 1, characterized in that each support means (2) has at its end bearing a collecting bar, a head (25) of a dielectric material which covers the collecting bar (3) and isolates it from the other collecting bars.

**Ansprüche**

1. Elektrische Hochspannungs-Schaltvorrichtung für Sammelschienen (3), bei welcher die Sammelschienen (3) so gehalten werden, daß ihre Achsen in den Ecken eines Dreiecks (ABC) angeordnet sind, dessen eine Seite (AC) senkrecht zur Achse der festen elektrischen Kontaktglieder (22) verläuft, wogegen die zweite Seite (AB) des Dreiecks sich in bezug auf die Spitze des Dreiecks (von unten gesehen) gegen die festen elektrischen Kontaktglieder (22) erstreckt, wobei die Länge der beiden ersten Seiten (AC, AB) kürzer ist als die Länge der Basis (BC) des Dreiecks, und bei welcher jedes Halteglied für eine Sammelschiene (3) auch einen Isolierteil (24) aus dielektrischem Material besitzt, der einen inneren sich konisch erweiternden Hohlraum aufweist, dessen Querschnitt sich mit dem ihn von der Spitze (A) des Dreiecks trennenden Abstand fortschreitend vergrößert, wobei der Isolierteil auf seiner Außenfläche an einer Stelle, die axial von seinem dem den Sammelschienen (3) zugewendeten Ende entgegengesetzten Ende entfernt ist, Befestigungsflansche zur Befestigung des Haltegliedes im Inneren des Gehäuses (1) trägt, dadurch gekennzeichnet, daß das durch die Achsen (A, B, C) der Sammelschienen (3) gebildete Dreieck ein gleichschenkeliges Dreieck ist, dessen erste Seite durch den einen der gleichen Schenkel gebildet ist, wobei dieser Schenkel symmetrisch in bezug auf die Achse (X-X) der festen elektrischen Kontaktglieder (22) angeordnet ist.

2. Vorrichtung nach Anspruch 1, dadurch gekennzeichnet, daß das Verhältnis der Länge der gleichen Schenkel des gleichschenkeligen Dreiecks (ABC) zur Länge der Basis (BC) des Dreiecks 0,55 bis 0,65 beträgt.

3. Vorrichtung nach Anspruch 1, dadurch gekennzeichnet, daß jedes Halteglied (2) einen leitenden Schenkel (21) ovalen Querschnitts besitzt.

4. Vorrichtung nach Anspruch 1, dadurch gekennzeichnet, daß der Isolierteil (24) jedes Haltegliedes einen ovalen Querschnitt besitzt.

5. Vorrichtung nach Anspruch 1, dadurch gekennzeichnet, daß jedes Halteglied (2) an seinem eine Sammelschiene tragenden Ende einen Kopf (25) aus dielektrischem Material trägt, der die Sammelschiene (3) überdeckt und sie von den anderen Sammelschienen isoliert.